# EUROPEAN PATENT SPECIFICATION

(11) **EP 2 406 932 B1**
(45) Date of publication and mention of the grant of the patent: **23.09.2015**
(21) Application number: 10725274.4
(22) Date of filing: 11.03.2010
(51) Int. Cl.: H04L 29/06, H04L 12/24, H04L 12/26, H04L 12/413, H04L 12/46

(54) **INTRUSION DETECTION FOR VIRTUAL LAYER-2 SERVICES**
EINDRINGERKENNUNG FÜR VIRTUELLE LAYER-2-DIENSTE
DÉTECTION D'INTRUSION POUR SERVICES DE COUCHE 2 VIRTUELS

(30) Priority: 13.03.2009 US 404023
(43) Date of publication of application: 18.01.2012
(73) Proprietor: ALCATEL LUCENT, 92100 Boulogne-Billancourt (FR)
(72) Inventor: PROULX, Denis Armand, Kanata Ontario K2W 1B6 (CA)
(74) Representative: Wetzel, Emmanuelle
(86) International application number: PCT/IB2010/001115
(87) International publication number: WO 2010/103407

(56) References cited:
- EP-A1- 1 720 312
- US-A1- 2002 016 858
- US-A1- 2003 105 881
- US-A1- 2006 187 856
- CY LEE M HIGASHIYAMA: "CE-based Virtual Private LAN <draft-lee-ce-based-vpl-02.txt>; draft-lee-ce-based-vpl-02.txt", 20030301, no. 2, 1 March 2003 (2003-03-01), XP015004111, ISSN: 0000-0004

## Description

### Field of the invention

The invention is directed to packet switching communication networks, particularly to providing intrusion detection for virtual Open System Interconnection (OSI) Layer-2 services such as Virtual Leased Line (VLL) and Virtual Private LAN Service (VPLS) services.

### Background of the Invention

Virtual Leased Line (VLL) is a service for providing Ethernet based point to point communication over Internet Protocol (IP) and Multi Protocol Label Switching (MPLS) networks (IP/MPLS). This technology is also referred to as Virtual Private Wire Service (VPWS) or Ethernet over MPLS (EoMPLS). The VPWS service provides a point-to-point connection between two Customer Edge (CE) routers. It does so by binding two attachment circuits (AC) to a pseudowire that connects two Provider Edge (PE) routers, wherein each PE router is connected to one of the CE routers via one of the attachment circuits. VLL typically uses pseudowire encapsulation for transporting Ethernet traffic over an MPLS tunnel across an IP/MPLS backbone. More information on pseudowires can be found in "Pseudo Wire Emulation Edge-to-Edge (PWE3) Architecture", RFC3985, IETF, March 2005, by S. Bryant and P. Pate.

Virtual Private LAN Service (VPLS) is an Ethernet service that effectively implements closed user groups via VPLS instantiations. In order to achieve full isolation between the user groups, VPLS dedicates a separate forwarding information base (FIB) on network routers per VPLS instance.

Each VPLS instance further requires that a dedicated mesh of pseudowire tunnels is provisioned between PE routers that are part of the VPLS.

Both VLL and VPLS services use Service Access Points (SAP) to bind tunnel endpoints at PE router ports to their respective service. For example, in the case of VPLS service, a SAP would specify physical identifiers (e.g. node, shelf, card, port) of the corresponding port and an identifier (e.g. VLAN5) of the VPLS.

In some cases a CE router is located in a remote or otherwise vulnerable location with respect to network security. In these cases it is desirable to have security measures in place that can respond to an intruder system participating in, or attempting to participate in, a virtual Layer-2 service provided by the CE router such as a VLL or VPLS service. Such an intruder system includes any system that is unauthorized to participate in the virtual Layer-2 service.

Document US2006187856 deals with a method and apparatus for processing a signal on an intermediate network node at an edge of a provider packet-switched network to support a link-layer virtual private network.

Document EP1720312 discloses a method for local area network security which includes monitoring connections between ports of a central device and a plurality of peripheral devices.

### SUMMARY OF THE INVENTION

In accordance with various embodiments, a method for detecting an attempt of an intruder system to participate in a virtual Layer-2 service in a packet switching network is provided as defined in claim 1. Particular features of this method are provided as defined in claims 2 to 5. In accordance with yet another aspect a system for detecting an attempt of an intruder system to participate in a virtual Layer-2 service in a packet switching network is provided as defined in claim 6. Particular features of this system are provided as defined in claims 7 to 10.

The invention is directed to detecting an attempt of an intruder system to participate in a virtual Layer-2 service provided over a packet switching network.

Some embodiments of the invention monitor operational status of an interface port of a PE router to which a CE router is communicatively coupled for providing a virtual Layer-2 service, determine, consequent to a change in said status, whether information that should relate to the CE router has changed; and thereby, in the affirmative, interpret said change to indicate that an intruder system has attempted to participate in the virtual Layer-2 service.

In some embodiments of the invention an identifier of an interface port selected for security monitoring is stored and an operational status of that interface port is determined. Dependent upon the operational status of the interface port indicating that the interface port is in an operational state, an initial version of information relating to a CE router communicatively coupled to the interface port for providing a virtual Layer-2 service is recorded. The operational status of the interface port is then monitored for a state change. Upon detecting the state change, a current version of the information is obtained and compared to the initial version of the information. Consequent to detecting a difference between the versions of the information, an alert is raised indicating that an intruder system has attempted to participate in the virtual Layer-2 service.

In some embodiments of the invention the specific information includes one or more Media Access Control (MAC) or IP addresses stored in a forwarding information base (FIB) of a PE router at which the interface port is located.

In some embodiments of the invention the specific information includes one or more MAC or IP addresses of the CE router. Additionally, or alternatively, in some embodiments the specific information includes other information relating to the CE router which is obtainable via command line interface (CLI) commands issued to the CE router.

In some embodiments of the invention the CE and PE routers can be accessed via CLI commands issued to a network management system of the packet switching network and the operational status of the interface port can be monitored via event notifications issued by the network management system.

Embodiments of the invention are capable of detecting when a communicative connection between a CE router and a PE router for providing a virtual Layer-2 service is broken, as could occur when an intruder system is connected to the PE router in place of the CE router in an attempt to participate in the virtual Layer-2 service. Advantageously, this capability is complementary to other security measures such as MAC filters and Anti-spoofing filters that depend on the content of data packets exchanged between the CE and PE routers and not on the operational status of communicative connections between them.

### Brief Description of the drawings

The foregoing and other objects, features and advantages of the invention will be apparent from the following more particular description of the preferred embodiments, as illustrated in the appended drawings, where:
Figure 1 illustrates a network configuration for detecting an attempt of an intruder system to participate in a Layer-2 service according to an embodiment of the invention; and
Figure 2 illustrates a method of detecting an attempt of an intruder system to participate in a virtual Layer-2 service according to the embodiment depicted in Figure 1.

In the figures like features are denoted by like reference characters.

### Detailed Description

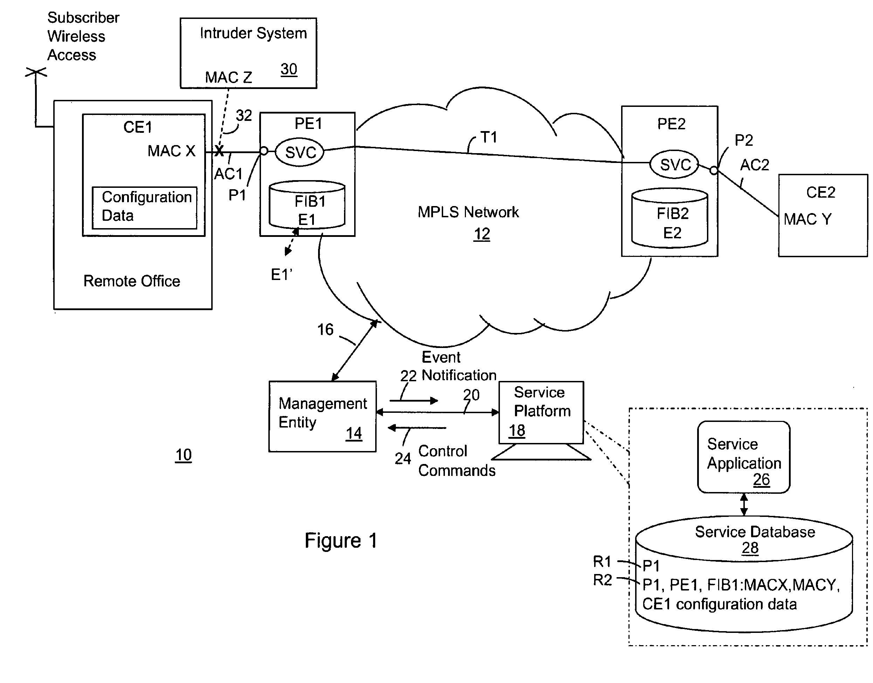

Referring to Figure 1, a network configuration 10 for providing a VPLS service over an MPLS network 12 includes a pseudowire tunnel T1 routed through the MPLS network 12 between a first provider edge router PE1 and a second provider edge router PE2. The pseudowire tunnel T1 has two endpoints, a first of which is at the first provider edge router PE1 and a second of which is at the second provider edge router PE2. A service instance SVC of the VPLS service is instantiated at each of the provider edge routers PE1, PE2 and associates the pseudowire tunnel T1 with the VPLS service. Accordingly, data packets associated with the VPLS service are communicated through the MPLS network 10 via the pseudowire tunnel T1 between the first and second provider edge routers PE1, PE2.

Typically, there would be multiple pseudowire tunnels connecting multiple provider edge routers. In some cases these tunnels form a fully connected mesh interconnecting the provider edge routers. In any case, when there are multiple pseudowire tunnels for a given service that terminate on a provider edge router, a forwarding information base is used at that router to determine over which of the tunnels a data packet should be forwarded to reach its destination. This determination is made based on the destination MAC or IP address of the data packet. A MAC address is a 48 bit address that is generally unique and dedicated to a given network interface card or adapter of a data communication system. A MAC address is also known as a hardware address. An IP address is a 32 bit (IPv4) or 128 bit (IPv6) address that is generally unique to a network interface or system but is assignable in software.

A first customer edge router CE1 is connected to a first interface port P1 of the first provider edge router PE1 via a first attachment circuit AC1. The first customer edge router CE1 has a first MAC address X. Similarly, a second customer edge router CE2 is connected to a second interface port P2 of the second provider edge router PE2 via a second attachment circuit AC2. The second customer edge router CE2 has a second MAC address Y.

The first provider edge router PE1 includes a first forwarding information base FIB1 associated with the service instance SVC. The first forwarding information base FIB1 includes a first entry E1 for the pseudowire tunnel T1. The first entry E1 associates the first MAC address X with the second MAC address Y for the purpose of communicating data packets between the first and second customer edge routers CE1, CE2. Similarly, the second provider edge router PE2 includes a second forwarding information base FIB2 associated with the service instance SVC. The second forwarding information base FIB2 includes a second entry E2 for the pseudowire tunnel T1. The second entry E2 associates the first MAC address X with the second MAC address Y for the purpose of communicating data packets between the first and second customer edge routers CE1, CE2.

A first service access point at the first provider edge router PE1 associates the first interface port P1 with the service instance SVC, such that data packets received at the first interface port P1 from the first attachment circuit AC1 that are associated with the VPLS service are forwarded over a pseudowire tunnel in accordance with information in the first forwarding information base FIB1. Such information includes the first entry E1 in the first forwarding information base FIB1, which in this case causes data packets with a source MAC address being the first MAC address X to be forwarded over the pseudowire tunnel T1 when their destination MAC address is the second MAC address Y. Similarly, data packets associated with the VPLS service received by the first provider edge router PE1 from the pseudowire tunnel T1 are forwarded to the first interface port P1 in accordance with information in the first service access point and the first forwarding information base FIB1.

A second service access point at the second provider edge router associates the second interface port P2 with the service instance SVC, such that data packets received at the second interface port P2 from the second attachment circuit AC2 that are associated with the VPLS service are forwarded over a pseudowire tunnel in accordance with information in the second forwarding information base FIB2. Such information includes the second entry E2 in the second forwarding information base FIB2, which in this case causes data packets with a source MAC address being the second MAC address Y to be forwarded over the pseudowire tunnel T1 when their destination MAC address is the first MAC address X. Similarly, data packets associated with the VPLS service received by the second provider edge router PE2 from the pseudowire tunnel T1 are forwarded to the second interface port P2 in accordance with information in the second service access point and the first forwarding information base FIB1.

In view of foregoing it should be clear that data packets associated with the VPLS service can be communicated between the first and second customer edge routers CE1, CE2 via their respective attachment circuits AC1, AC2, the first and second provider edge routers PE1, PE2, and the pseudowire tunnel T1. However, as previously mentioned in some cases a CE router is located in a remote or otherwise vulnerable location with respect to network security. In these cases it is desirable to have security measures in place that can respond to an intruder system participating in, or attempting to participate in, a virtual Layer-2 service provided by the CE router such as a VLL or VPLS service. Such an intruder system includes any system that is unauthorized to participate in the virtual Layer-2 service.

Still referring to Figure 1, the network configuration 10 includes a management entity 14 that is communicatively coupled to the provider edge routers PE1, PE2 via a control connection 16 and the MPLS network 12. The management entity 14 would typically be a network management system capable of performing operation, administration and maintenance (OAM) type functions on network elements in the MPLS network 12 such as the provider edge routers PE1, PE2. This functionality of the management entity 14 includes the capability to receive reports of equipment, service, and provisioning related events from network elements of the MPLS network 12, including event reports from the first and second provider edge routers PE1, PE2 regarding operational status of their respective interface ports P1, P2, among other things.

The network configuration 10 also includes a service platform 18 that is communicatively coupled to the management entity 14 via an open operating system (OS) interface 20. Using the open OS interface 20, the service platform 18 has access to event notifications 22, which include event notifications related to the event reports from the network elements. Further using the open OS interface 20 the service platform 18 can issue control commands 24 to the management entity 14 including commands to effect provisioning changes at the provider edge routers PE1, PE2. The service platform 18 would typically be a laptop or desktop computer or workstation. The open OS interface is a Java message service (JMS) interface; although other types of message interfaces could be used.

The service platform 18 executes a service application 26 that is in communication with a service database 28 on the service platform 18, although the service database 28 could also reside on the management entity 14 with access to it given by the open OS interface 20. The service application 26 is a software program that embodies a method of detecting an attempt of an intruder system to participate in a virtual Layer-2 service in accordance with an embodiment of the invention.

According to the method, the service application 26 monitors event notifications 22 received over the open OS interface 20. The service application 26 checks the event notifications 22 to determine if any of them relate to an operational status of an interface port selected for security monitoring. An identifier of each port so selected is stored in a first record R1 of the service database 28. For any such port, information contained in FIB entries of FIBs corresponding to VPLS services provided via that port would have already been retrieved from the associated PE router and stored in the service database 28. For example, in the case of the first interface port P1, information from the first entry E1 in the first forwarding information base FIB1 is stored in a second record R2 of the service database 28. The second record R2 includes the identifier of the first port P1, although it can be associated to the first port P1 by other means. Additionally or alternatively, other information relating to the CE router communicatively coupled to the port by an attachment circuit could be retrieved from that CE router and stored in the service database 28. For example, configuration data of the first customer edge router CE1 is also stored in the second record R2 of the service database 28. The information contained in the second record R2 would preferably be retrieved by the service platform 18 using control commands issued to the management entity 14 over the OS interface 20, although other ways could work. Such information would be retrieved when the port is selected for security monitoring or when security monitoring is reinitialized on the port and the port is in an operational state.

It should be understood that there are many ways of storing all or some of the information contained in the first and second records R1, R2. However, any of these ways should suffice if they enable identification of a port on which security monitoring is to be performed and provide information relating to the CE router communicatively coupled to that port when such security monitoring was activated and the port was in an operational state. For example, the first record R1 could be omitted if the second record R2 contained identification of the first port P1 and was stored in a manner indicating that the second record R2 contained information that related to a port on which security monitoring was to be performed. For example, such a manner could be to store the second record R2 in a special part of the service database 28 or in a group of similar records.

Still referring to Figure 1, the first customer edge router CE1 is shown as being in a remote office such as a small building or cabin in an unpopulated area that is not visited by support staff of the packet switching network for long periods. Such a location is an example of vulnerable location with respect to network security. In an attempt to participate in the VPLS service, an intruder system 30 is communicatively connected to the first port P1 by disconnecting the first attachment circuit AC1 at the first customer edge router CE1 and reconnecting 32 the first attachment circuit AC1 to the intruder system 30. However, disconnecting and reconnecting the first attachment circuit AC1 causes the first interface port P1 to transition from an operational state to a non-operational state and back to an operational state again. Additionally, an address resolution protocol running on the first provider edge router PE1 will learn a third MAC address Z of the intruder system 30 from data packets sent over the first attachment circuit AC1 by the intruder system 30. The first provider edge router PE1 will update information contained in the first forwarding information base FIB1 to a current version. For example, the first entry E1 will be updated to a current version E1' of the first entry.

The service application 26 is monitoring event notifications 22 from which it can detect a transition in the operational status of interface ports such as from an operational state to a non-operational state and visa versa. Upon detecting a change in operational status of an interface port, the service application 26 accesses information in the service database 28, such as the first record R1, to determine if the affected port is one that has been selected for security monitoring. In the affirmative, the service application 26 retrieves current information contained in FIB entries of FIBs corresponding to VPLS services provided via that port. The service application 26 retrieves this information from the PE router to which the affected port belongs. The relevant FIB is identified by information contained in the SAP that associates the affected port with a service instance, since a dedicated FIB exists in the PE router for each instance of a VPLS service. For example, upon detecting a change in the operational status of the first interface port P1, the service application 26 issues control commands 24 to the management entity 14 to retrieve the current version E1' of the first entry in the first forwarding information base FIB1.

The service application 26 then accesses the service database 28 to retrieve an initial version of information relating to the first customer edge router CE1. This information is referred to as initial in that it was retrieved from the PE router, and alternatively or additionally the CE router, when security monitoring on the affected port was enabled or reinitialized. For example, the service platform 26 retrieves information contained in the second record R2. The initial version of the information is compared to the current version of the information, and consequent to detecting a mismatch between any information contained in the current and initial versions that should match, the service application 26 interprets the mismatch as indicating that an intruder system has attempted to participate in the virtual Layer-2 service. For example, the service application 26 compares the MAC addresses of the CE router communicatively coupled to the first attachment circuit AC1 that has been stored in the second record R2 and in the current version E1' of the first entry. In this case there is a mismatch because the second record R2 contains the first MAC address X and the current version E1' of the first entry contains the third MAC address Z. Additionally or alternatively, in a similar manner initial and current versions of other information relating to the CE router or system communicatively coupled to the affected port could be compared for a mismatch. For example any data such as configuration data that is retrievable from a CE router and that is unlikely or too difficult to be cloned by an intruder system could be used for the comparison.

Upon making a determination that an intruder system has attempted to participate in the virtual Layer-2 service via an interface port selected for security monitoring, the service application 26 disables the affected interface port and issues an alert to an operator, such as raising a network alarm or sending an e-mail or other type of electronic message to an operator or other entity responsible for secure operation of the virtual Layer-2 service. The service application 26 disables the affected interface port by issuing control commands to the management entity 14 in order to put the affected interface port in a non-operational state. For example, the service application 26 issues control commands 24 to the management entity 14 over the OS interface 20 to cause the first interface port P1 to transition into a non-operational state.

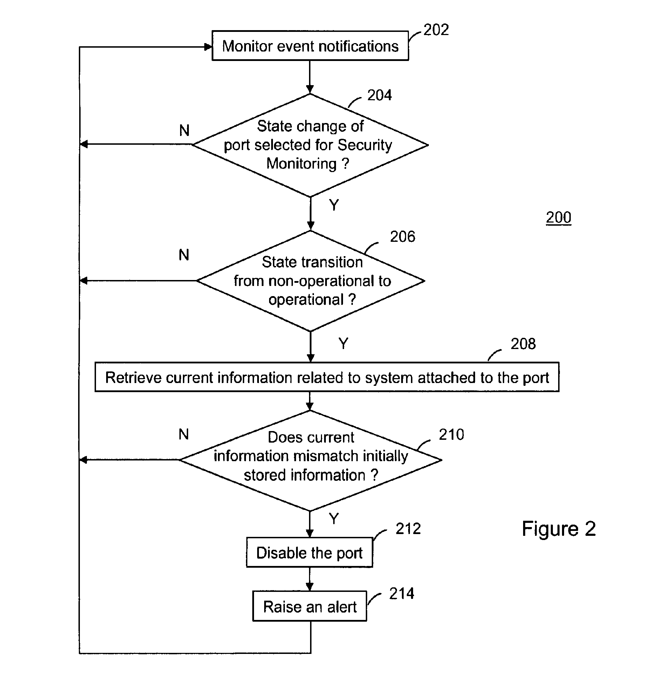

Referring to Figure 2, a method 200 detecting an attempt of an intruder system to participate in a virtual Layer-2 service will now be described with additional reference to Figure 1. The method 200 includes monitoring 202 event notifications of selected interface ports. Selection of the interface ports would preferably be performed using the service application 26, but could also be performed by another application running on the service platform 18 or management entity 14. Recordation of these selections would preferably be stored at the service platform 18, e.g. in the service database 28, but they could also be stored at the management entity 14, or in both locations. It is sufficient for performing the method 200 that an indication of interface ports to be security monitored is available to an entity such as the service application 26 that performs the method 200 automatically without human intervention. Such indication would include an identifier of each such port to be security monitored. The event notifications are monitored by receiving event notifications 22 from the management entity 14 via the open OS interface 20.

A determination 204 is made whether an event notification of a selected interface port indicates that the operational status of the interface port has changed. If the operational status of the affected port changed from an operational state to a non-operational the method waits for a further change to an operational state to occur. Upon detecting 206 a transition in the operational state of the affected port from a non-operational state to an operational state, the service application retrieves 208 current information relating to the system that is communicatively coupled to the affected interface port. This information would preferably be the MAC address of the system but could be any other information such as configuration data that would be unlikely to reside on an intruder system.

A determination 210 is made whether the retrieved current information mismatches information previously retrieved relating to the CE router that was communicatively coupled to the affected interface port. Consequent to a mismatch being detected the affected interface port is disabled 212 and an alert is raised 214. The method 200 then returns to monitoring 202 event notifications 22.

Numerous modifications, variations and adaptations may be made to the embodiments of the invention described above without departing from the scope of the invention, which is defined in the claims.

## Claims

1. A method of detecting an attempt of an intruder system (30) to participate in a virtual Layer-2 service in a packet switching network, **characterized in that** said method also comprises the steps of :
monitoring an operational status of an interface port (PI) of a provider edge router (PE 1) to which a customer edge router (CE 1) is communicatively coupled for providing the virtual Layer-2 service;
detecting a change has occurred in the operational status of said interface port (PI) of said provider edge router (PEI);
retrieving a current version of information related to said customer edge router (CE 1);
comparing the current version of the information to an initial version of the information;
interpreting a difference between the versions of information to indicate that an intruder system (30) has attempted to participate in the virtual Layer-2 service,
disabling the interface port (PI) upon making said interpretation, and wherein the information includes configuration data other than a MAC or IP address relating to the
customer edge router (CE 1) which is obtainable from the customer edge router (CE1) via a management entity (14).

2. The method of claim 1, wherein the method further comprises:
recording an identifier of the interface port (PI), thereby indicating that the interface port (p 1) has been selected for security monitoring; storing the initial version of the information when security monitoring of the interface port (PI) is enabled and the interface port is in an operational state.

3. The method of claim 1, wherein the information further includes a Media Access Control (MAC) address stored in a forwarding information base of the provider edge router.

4. The method of claim 3 or 1, wherein the information further includes an Internet Protocol (IP) address stored in a forwarding information base of the provider edge router.

5. The method of claim 1, wherein the step of monitoring further comprises:
monitoring event notifications reported by a network management entity (14) over an operating system interface.

6. A system for detecting an attempt of an intruder system to participate in a virtual Layer-2 service in a packet switching network,
**characterized in that** said system comprises:
a service platform for executing a service application (26) stored thereon, the service platform comprising:
means for communicatively coupling to a network management entity (14) of the packet switching network via an operating system interface; and
a service database (28) for storing an initial version of information relating to a customer edge router communicatively coupled to an interface port (PI) of a provider edge router for providing the virtual Layer-2 service
wherein the service application (26) comprises instructions recorded on computer readable media to be executed by the service platform for:
monitoring event notifications reported by the network management entity over the operating system interface that relate to an operational status of the interface port (PI);
detecting a change has occurred in the operational status of said interface port (PI) of said provider edge router (PEI);
retrieving a current version of information related to said customer edge router (CEI);
comparing the current version of the information to an initial version of the information;
interpreting a difference between the versions of information to indicate that an intruder system (30) has attempted to participate in the virtual Layer-2 service,
disabling the interface port (PI) upon making said interpretation, and wherein the information includes configuration data other than a MAC or IP address relating to the customer edge router (CE 1) which is obtainable from the customer edge router (CEI) via said management entity (14).

7. The system of claim 6, wherein the service application further comprises instructions for:
recording an identifier of the interface port (PI), thereby indicating that the interface port has been selected for security monitoring; and
storing an initial version of the information when security monitoring of the interface port (PI) is enabled and the interface port is in an operational state.

8. The system of claim 6, wherein the information further includes a Media Access Control (MAC) address stored in a forwarding information base of the provider edge router.

9. The system of claim 8 or 6, wherein the information further includes an 25 Internet Protocol (IP) address stored in a forwarding information base of the provider edge router.

10. The system of claim 9, wherein the virtual Layer-2 service is a virtual private local area network service or a virtual leased line service.

## Patentansprüche

1. Verfahren für das Feststellen eines Versuchs eines Eindringsystems (30) zur Teilnahme an einem virtuellen Layer-2-Dienst in einem Paketvermittlungsnetzwerk, **dadurch gekennzeichnet, dass** besagtes Verfahren weiterhin die folgenden Schritte umfasst:
Überwachen des Betriebsstatus einer Schnittstelle (PI) eines Provider-Rand-Routers (PE 1), mit dem ein Kunden-Rand-Router (CE 1) kommunikativ für das Zurverfügungstellen des virtuellen Layer-2-Dienstes gekoppelt ist;
Feststellen, dass beim Betriebsstatus besagter Schnittstelle (PI) besagten Provider-Rand-Routers (PE 1) eine Veränderung stattgefunden hat;
Abrufen einer aktuellen Version von Informationen zu besagtem Kunden-Rand-Router (CE1);
Vergleichen der aktuellen Version der Informationen mit einer anfänglichen Version der Informationen;
Interpretieren des Unterschieds zwischen den Versionen der Informationen, um anzuzeigen, dass ein Eindringsystem (30) versucht hat, am virtuellen Layer-2-Dienst teilzunehmen,
Deaktivieren der Schnittstelle (PI) auf erfolgte besagte Interpretation hin, wobei die Informationen über eine MAC- oder IP-Adresse zum Kunden-Rand-Router (CE 1) hinaus weitere Konfigurationsdaten umfassen, die vom Kunden-Rand-Router (CE 1) über eine Managemententität (14) abrufbar sind.

2. Verfahren nach Anspruch 1, wobei das Verfahren weiterhin umfasst:
Aufzeichnen einer Kennung der Schnittstelle (PI), dabei anzeigend, dass die Schnittstelle (p1) zwecks Sicherheitsüberwachung ausgewählt wurde;
Speichern der ursprünglichen Version der Informationen, wenn die Sicherheitsüberwachung der Schnittstelle (PI) aktiviert ist und sich die Schnittstelle im Betriebszustand befindet.

3. Verfahren aus Anspruch 1, wobei die Informationen weiterhin eine Medienzugriffssteuerungs-Adresse (MAC) umfassen, gespeichert in einer tllleiterleitungsinformationsbasis des Provider-Rand-Routers.

4. Verfahren aus Anspruch 3 oder 1, wobei die Informationen weiterhin eine Internet-Protocol-Adresse (IP) umfassen, gespeichert in einer Weiterleitungsinformationsbasis des Provider-Rand-Routers.

5. Verfahren nach Anspruch 1, wobei der Schritt des Überwachens weiterhin umfasst:
Überwachen von Ereignisbenachrichtigungen, die von einer Netzwerk-Managemententität (14) über eine Betriebssystemschnittstelle berichtet werden.

6. System für das Feststellen eines Versuchs eines Eindringsystems zur Teilnahme an einem virtuellen Layer-2-Dienst in einem Paketvermittlungsnetzwerk, **dadurch gekennzeichnet, dass** besagtes System weiterhin umfasst:
eine Serviceplattform für das Ausführen einer darauf gespeicherten Serviceanwendung (26), wobei die Serviceplattform umfasst:
Mittel für das kommunikative Koppeln an eine Netzwerk-Managemententität (14) des Paketvermittlungsnetzwerks über eine Betriebssystemschnittstelle; und
eine Servicedatenbank (28) für das Speichern einer ursprünglichen Version der Informationen bezüglich eines kommunikativ an eine Schnittstelle (PI) eines Provider-Rand-Routers für das Zurverfügungstellen des virtuellen Layer-2-Dienstes gekoppelten Kunden-Rand-Routers,
wobei die Serviceanwendung (26) auf einem computerlesbaren Medium gespeicherte Anweisungen umfasst, die von der Serviceplattform ausgeführt werden für:
das Überwachen von Ereignisbenachrichtigungen, die von der Netzwerk-Managemententität über die Betriebssystemschnittstelle berichtet werden und die sich auf einen Betriebsstatus der Schnittstelle (PI) beziehen;
das Feststellen, dass beim Betriebsstatus besagter Schnittstelle (PI) besagten Provider-Rand-Routers (PEI) eine Veränderung stattgefunden hat;
das Abrufen einer aktuellen Version von Informationen zu besagtem Kunden-Rand-Router (CEI);
das Vergleichen der aktuellen Version der Informationen mit einer anfänglichen Version der Informationen;
das Interpretieren des Unterschieds zwischen den Versionen der Informationen, um anzuzeigen, dass ein Eindringsystem (30) versucht hat, am virtuellen Layer-2-Dienst teilzunehmen,
das Deaktivieren der Schnittstelle (PI) nach dem Vornehmen besagter Interpretation und wobei die Informationen über eine MAC- oder IP-Adresse zum Kunden-Rand-Router (CE 1) hinaus weitere Konfigurationsdaten umfassen, die vom Kunden-Rand-Router (CEI) über eine Managemententität (14) abrufbar sind.

7. System nach Anspruch 6, wobei die Serviceanwendung weiterhin Anweisungen umfasst für:
das Aufzeichnen einer Kennung der Schnittstelle (PI), dabei anzeigend, dass die Schnittstelle zwecks Sicherheitsüberwachung ausgewählt wurde; und für das Speichern einer ursprünglichen Version der Informationen, wenn die Sicherheitsüberwachung der Schnittstelle (PI) aktiviert ist und sich die Schnittstelle im Betriebszustand befindet.

8. System nach Anspruch 6, wobei die Informationen weiterhin eine Medienzugriffssteuerungs-Adresse (MAC) umfassen, gespeichert in einer Weiterleitungsinformationsbasis des Provider-Rand-Routers.

9. System nach Anspruch 8 oder 6, wobei die Informationen weiterhin eine Internet-Protocol-Adresse (IP) umfassen, gespeichert in einer Weiterleitungsinformationsbasis des Provider-Rand-Routers.

10. System nach Anspruch 9, wobei der virtuelle Layer-2-Dienst ein Dienst eines virtuellen privaten lokalen Netzwerks oder ein Dienst einer virtuellen Standleitung ist.

## Revendications

1. Procédé de détection d'une tentative d'un système intrus (30) de participer à un service de couche 2 virtuel dans un réseau de commutation de paquets, **caractérisé en ce que** ledit procédé comprend également les étapes suivantes :
surveiller un état opérationnel d'un port d'interface (PI) d'un routeur de bordure fournisseur (PE1) auquel un routeur de bordure client (CE1) est couplé en communication pour fournir le service de couche 2 virtuel ;
détecter qu'un changement s'est produit dans l'état opérationnel dudit port d'interface (PI) dudit routeur de bordure fournisseur (PEI) ;
récupérer une version actuelle d'informations relatives audit routeur de bordure client (CE1) ;
comparer la version actuelle des informations à une version initiale des informations ;
interpréter une différence entre les versions des informations pour indiquer qu'un système intrus (30) a tenté de participer au service de couche 2 virtuel ;
désactiver le port d'interface (PI) au moment d'effectuer ladite interprétation, et dans lequel les informations comprennent des données de configuration autres qu'une adresse MAC ou IP relatives au routeur de bordure client (CE1) qui peuvent être obtenues à partir du routeur de bordure client (CE1) par l'intermédiaire d'une entité de gestion (14).

2. Procédé selon la revendication 1, le procédé comprenant en outre les étapes suivantes :
enregistrer un identifiant du port d'interface (PI), indiquant ainsi que le port d'interface (p1) a été sélectionné pour la surveillance de la sécurité ;
stocker la version initiale des informations lorsque la surveillance de la sécurité du port d'interface (PI) est activée et lorsque le port d'interface est dans un état opérationnel.

3. Procédé selon la revendication 1, dans lequel les informations comprennent en outre une adresse de contrôle d'accès au support (MAC) stockée dans une base d'informations de transfert du routeur de bordure fournisseur.

4. Procédé selon la revendication 3 ou 1, dans lequel les informations comprennent en outre une adresse de protocole Internet (IP) stockée dans une base d'informations de transfert du routeur de bordure fournisseur.

5. Procédé selon la revendication 1, dans lequel l'étape de surveillance comprend en outre l'étape suivante :
surveiller des notifications d'événements rapportées par une entité de gestion de réseau (14) sur une interface de système d'exploitation.

6. Système pour détecter une tentative d'un système intrus de participer à un service de couche 2 virtuel dans un réseau de commutation de paquets, **caractérisé en ce que** ledit système comprend :
une plate-forme de services pour exécuter une application de services (26) stockée sur celle-ci, la plate-forme de services comprenant :
des moyens de couplage en communication à une entité de gestion de réseau (14) du réseau de commutation de paquets par l'intermédiaire d'une interface de système d'exploitation ; et
une base de données de services (28) pour stocker une version initiale des informations relatives à un routeur de bordure client couplé en communication à un port d'interface (PI) d'un routeur de bordure fournisseur pour fournir le service de couche 2 virtuel dans lequel l'application de services (26) comprend des instructions enregistrées sur des supports lisibles par ordinateur devant être exécutées par la plate-forme de services pour : surveiller des notifications d'événements rapportées par l'entité de gestion de réseau sur l'interface de système d'exploitation qui se rapportent à un état opérationnel du port d'interface (PI) ;
détecter qu'un changement s'est produit dans l'état opérationnel dudit port d'interface (PI) dudit routeur de bordure fournisseur (PEI) ;
récupérer une version actuelle d'informations relatives audit routeur de bordure client (CEI) ;
comparer la version actuelle des informations à une version initiale des informations ;
interpréter une différence entre les versions des informations pour indiquer qu'un système intrus (30) a tenté de participer au service de couche 2 virtuel ;
désactiver le port d'interface (PI) au moment d'effectuer ladite interprétation, et
dans lequel les informations comprennent des données de configuration autres qu'une adresse MAC ou IP relatives au routeur de bordure client (CE1) qui peuvent être obtenues à partir du routeur de bordure client (CEI) par l'intermédiaire de ladite entité de gestion (14).

7. Système selon la revendication 6, dans lequel l'application de services comprend en outre des instructions pour :
enregistrer un identifiant du port d'interface (PI), indiquant ainsi que le port d'interface a été sélectionné pour la surveillance de la sécurité ; et
stocker une version initiale des informations lorsque la surveillance de la sécurité du port d'interface (PI) est activée et lorsque le port d'interface est dans un état opérationnel.

8. Système selon la revendication 6, dans lequel les informations comprennent en outre une adresse de contrôle d'accès au support (MAC) stockée dans une base d'informations de transfert du routeur de bordure fournisseur.

9. Système selon la revendication 8 ou 6, dans lequel les informations comprennent en outre une adresse de protocole Internet (IP) stockée dans une base d'informations de transfert du routeur de bordure fournisseur.

10. Système selon la revendication 9, dans lequel le service de couche 2 virtuel est un service de réseau local privé virtuel ou un service de ligne louée virtuelle.
